# EUROPÄISCHE PATENTANMELDUNG

(11) **EP 4 498 469 A2**
(43) Veröffentlichungstag der Anmeldung: **29.01.2025**
(21) Anmeldenummer: 24181248.6
(22) Anmeldetag: 10.06.2024
(51) Int. Cl.: H01M 10/0585, B65H 9/20, G01B 11/245, H01M 10/04, H01M 10/42

(54) **VERFAHREN ZUR BESTIMMUNG EINER LAGE VON ELEKTRODENBLÄTTERN IN EINEM ELEKTRODEN-SEPARATOR-VERBUND**

(30) Priorität: 26.07.2023 DE 102023207152
(71) Anmelder: VOLKSWAGEN AG, 38440 Wolfsburg (DE)
(72) Erfinder: Masuch, Steffen, 38118 Braunschweig (DE)

(57) **Zusammenfassung**

Die Erfindung betrifft ein Verfahren zur Bestimmung einer Lage von Elektrodenblättern (10) in einem Elektroden-Separator-Verbund, ESV (4), wobei die Elektrodenblätter (10) zumindest zwei Komponenten aufweisen, nämlich ein Substrat (10S) und eine beidseitige Beschichtung (10B) des Substrats (10S), wobei die Elektrodenblätter (10) zumindest eine erste und eine zweite Art von Elektrodenblätter (10A,10K) umfassen, wobei das Verfahren die folgenden Schritte umfasst:
- Zumindest bereichsweise Optisches Aufnehmen jedes Elektrodenblatts (10,10A,10K) in einem oder mehreren Aufnahmebereichen;
- Anhand der optischen Aufnahme Bestimmen zumindest eines Bereichs einer Geometrie des Substrats (10S) und zumindest eines Bereichs einer Geometrie der beidseitigen Beschichtung (10B) des Substrats (10S);
- Stapeln der Elektrodenblätter (10,10A,10K) zu einem ESV (4);
- Computer-tomografisches Erfassen zumindest einer der zwei Komponenten der Elektrodenblätter der ersten Art (10A) im ESV (4) und zumindest einer der zwei Komponenten der Elektrodenblätter der zweiten Art (10K) im ESV (4) in einer computer-tomografischen Aufnahme;
- Anhand der computer-tomografischen Aufnahme zumindest bereichsweise Bestimmen einer Geometrie der jeweiligen erfassten Komponente;
- Ausrichten der jeweiligen Geometrien aus den optischen Aufnahmen mit den aus der computer-tomografischen Aufnahme bestimmten Geometrien der Elektrodenblätter (10,10A,10K) im ESV (4);
- Ermitteln einer Lage des Substrats (10S) jedes Elektrodenblatts (10,10A,10K) und dessen beidseitiger Beschichtung, wobei die Lage von nicht-erfassten Komponenten in der computer-tomografischen Aufnahme aus den ausgerichteten Geometrien der optischen Aufnahme ermittelt werden, so dass von allen Komponenten der Elektrodenblätter des ESV (4) eine Lage im ESV (4) ermittelt wird.

## Beschreibung

Die Erfindung betrifft ein Verfahren zur Bestimmung einer Lage von Elektrodenblättern in einem Elektroden-Separator-Verbund, sowie ein System und ein Computerprogramm zur Durchführung des Verfahrens.

Zur Herstellung von Zellen müssen in die kontinuierlichen Elektrodenfolien Ableiterkonturen hineingeschnitten werden. Dies wird mittels des Prozesses des sogenannten Laserschneiden durchgeführt (Notchen) durchgeführt.

Anschließend erfolgt ein weiterer Schnitt quer zur Richtig des Laserschnitts, sodass ein Einzelelektrodenblatt vorliegt. Jedes Elektrodenblatt weist ein Substrat sowie eine beidseitige Beschichtung des Substrats auf. Beim Laserschnitt ist es üblich in einem unbeschichteten Kontaktierbereich der Anodenblätter bzw. Kathodenblätter zu schneiden. Dies ist zum einen auf höhere Prozessgeschwindigkeit zurückzuführen sowie auf die erzielbaren Schnittkanteneigenschaften bzw. Sicherheitsanforderungen. Wird im Aktivbereich, also im Bereich der Beschichtungen geschnitten, ist es möglich, dass Grate und Schweißperlen entstehen. Gelangen diese im weiteren Verlauf in die Zelle kann dies zu Kurzschlüssen durch das Durchstoßen des Separators oder durch Dendritenwachstum führen.

Aus diesen Gründen ist eine bevorzugte Variante im Substrat der Anode und Kathode und nicht im Aktivmaterial zu schneiden. Der unbeschichtete Bereich der Elektrodenblätter wird umgangssprachlich als "nackte Schulter" bezeichnet.

Im anschließenden Stapelprozess werden die Anodenblätter, Kathodenblätter und Separatoren abwechselnd zu einem Elektroden-Separator-Verbund (ESV) zusammengeführt.

Die Ablagegenauigkeit der Elektrodenblätter im ESV ist das Gütekriterium für die Prozessfähigkeit der Stapelmaschine und ist ein sicherheits- und funktionsrelevantes Produktmerkmal des ESVs. Alle Eckbereiche der Elektrodenblätter müssen einen definierten Abstand zueinander haben und in einem definierten Toleranzband liegen. Die elektrochemische Performance einer Batteriezelle nimmt mit geringerer Elektrodenüberdeckung im Betrieb schneller ab. Zusätzlich werden ein Kurzschluss und der Ausfall der Batteriezelle durch einen direkten Kontakt der Anode und Kathode bei einer falschen Ablage ausgelöst.

Aktuell ist die Anode (Minus) umlaufend etwas größer als die Kathode (Plus) eines Kompartiments, um eine vollständige Überdeckung der Anode und Kathode trotz Ablageungenauigkeiten zu realisieren.

Aktuelle Bestrebungen wollen diesen Überhang der Anode verkleinern, um Material einzusparen.

Dies bedeutet, dass an den Stapelprozess steigende Anforderungen an die Ablagegenauigkeit gestellt werden. Zusätzlich ist der Stapelprozess ein Bottleneck in der Batteriezellfertigung, sodass zukünftig seine Prozessgeschwindigkeit erhöht werden muss. Mit steigender Prozessgeschwindigkeit sinkt jedoch die Ablagegenauigkeit. Zur weiteren Optimierung und Entwicklung von Stapelprozessen muss somit die Ablage der Elektroden im Stapelverbund gemessen werden.

Die Lage der Elektrodenblätter im ESV wird mittels computer-tomographischer Bildgebungsverfahren ermittelt. Hier besteht jedoch der Nachteil, dass bestimmte Materialien der Anoden bzw. Kathodenblätter (Beschichtung oder Substrat) keinen CT-Kontrast geben und damit in der CT Aufnahme unsichtbar bleiben.

Der vorliegenden Erfindung liegt die Aufgabe zugrunde, die Erfassung und Bestimmung der Lage und damit der Ablagegenauigkeit, Prozessfähigkeit und eines Überdeckungskriteriums so zu verbessern, dass die unsichtbaren Komponenten in den CT-Daten der Elektrodenblätter bei der Auswertung Berücksichtigung finden können.

Die Aufgabe wird erfindungsgemäß gelöst durch ein Verfahren gemäß Anspruch 1, eine System gemäß Anspruch 12, sowie ein Computerprogram gemäß Anspruch 13. Vorteilhafte Ausführungen sind in den Unteransprüchen gegeben.

Ein erster Aspekt der Erfindung betrifft ein Verfahren zur Bestimmung einer Lage, insbesondere einer 3D-Lage von Elektrodenblättern in einem Elektroden-Separator-Verbund, ESV, wobei die Elektrodenblätter zumindest zwei Komponenten aufweisen, nämlich ein Substrat und eine beidseitige Beschichtung des Substrats, insbesondere in einem Aktivbereich des Elektrodenblattes, insbesondere wobei das Substrat der Elektrodenblätter zumindest in einem Kontaktierbereich unbeschichtet ist, wobei die Elektrodenblätter zumindest eine erste und eine zweite Art von Elektrodenblätter umfassen, nämlich insbesondere Anodenblätter, als erste Art und Kathodenblätter als zweite Art, die aus einem unterschiedlichen Substrat und einem unterschiedlichen Beschichtungsmaterial gefertigt sind, wobei das Verfahren die folgenden Schritte umfasst:
- Zumindest bereichsweise optisches Aufnehmen jedes Elektrodenblatts insbesondere samt unbeschichtetem Kontaktierbereich des Substrats und dem beidseitig beschichteten Aktivbereich;
- Anhand der optischen Aufnahme Bestimmen zumindest eines Bereichs einer Geometrie des Substrats und zumindest eines Bereichs einer Geometrie der beidseitigen Beschichtung des Substrats für jedes Elektrodenblatt;
- Indizierung jedes Elektrodenblatts, so dass eine Zuordnung jedes Elektrodenblatts und den dazu bestimmten Geometrien aus den optischen Aufnahmen und der Art des Elektrodenblatts im ESV erfolgen kann;
- Stapeln der Elektrodenblätter zu einem ESV;
- Computer-tomografisches (CT) Erfassen zumindest einer der zwei Komponenten der Elektrodenblätter der ersten Art im ESV und zumindest einer der zwei Komponenten der Elektrodenblätter der zweiten Art im ESV in einer computer-tomografischen Aufnahme;
- Anhand der computer-tomografischen Aufnahme zumindest bereichsweise Bestimmen einer Geometrie der jeweiligen erfassten Komponente;
- Ausrichten und insbesondere skalieren der jeweiligen Geometrien aus den optischen Aufnahmen mit den aus der computer-tomografischen Aufnahme bestimmten Geometrien der Elektrodenblätter im ESV, insbesondere so dass eine Lage der Geometrien aus beiden Aufnahmen übereinstimmt;
- Ermitteln einer Lage des Substrats jedes Elektrodenblatts und dessen beidseitiger Beschichtung, wobei die Lage von nicht-erfassten Komponenten in der computer-tomografischen Aufnahme aus den bzw. den mit-/ co- ausgerichteten Geometrien der optischen Aufnahme ermittelt werden, so dass von allen Komponenten der Elektrodenblätter des ESV eine Lage im ESV ermittelt wird.

Die Erfindung erlaubt es in einfacher und zuverlässiger Weise die in den computer-tomografischen (CT) Daten fehlenden Information bzgl. der Geometrien des Substrats bzw. dessen Beschichtung zu ergänzen, so dass wichtige Informationen zur Bestimmung der Prozessfähigkeit und/oder Produktqualität für jeden ESV erhalten werden.

Die Beschichtung des Substrats bsteht aus zumindest einem Beschichtungsmaterial, das für beide Arten von Elektrodenblätter unterschiedlich sein kann.

Die fehlende Information in den CT-Daten hat mit den im ESV verwendeten Materialien zu tun, da einige Beschichtungsmaterialien oder Substratmaterialien keinen und nur geringen CT-Kontrast aufweisen. Diese Schichten bleiben demnach in den CT-Aufnahmen unsichtbar, so dass die Geometrien dieser unsichtbaren Schichten nicht in die Ermittlung der Prozessfähigkeit und Produktquality eingehen können.

Die Erfindung schlägt nun vor, anhand zuvor gewonnener optischer Daten, diese fehlenden Informationen zu ergänzen. Dazu ist es notwendig, jedes Elektrodenblatt schon vor dem Stapeln vollständig zu erfassen.

Anschließend werden die Elektrodenblätter in den CT-Daten wieder identifiziert und die optisch erfassten Geometrien können den jeweiligen Substraten und Beschichtungen zugeordnet werden.

Die Lage eines Elektrodenblatts, des Substrats, und/oder dessen Beschichtung ist insbesondere eine dem Elektrodenblatt zugeordnete dreidimensionale Position im ESV sowie eine Orientierung, insbesondere bzgl. Einer ESV-Aufnahmevorrichtung, wie ein Rahmen, bestimmt.

Als Geometrie wird im Kontext der vorliegenden Spezifikation insbesondere eine Außenkontur verstanden, die eine Berandung des jeweiligen Elements erfasst.

Gemäß einer weiteren Ausführungsform der Erfindung ist vorgesehen, dass bei Elektrodenblättern der ersten Art die Beschichtung des Elektrodenblattes computer-tomografisch nicht erfasst wird, und bei Elektrodenblättern der zweiten Art das Substrat computer-tomografisch nicht erfasst wird.

Der Ausdruck "nicht erfasst" in diesem Zusammenhang bedeutet insbesondere, dass eine Signal-zu-Rausch-Verhältnis, SNR, zu gering ist, als, dass sich ein auswertbarer Kontrast in den CT-Daten ergeben würde, anhand dessen eine Geometrie der Beschichtung bzw. des Substrats ausreichend genau ermittelbar wäre. Das geringe SNR ist dem Absorptionsvermögen des jeweiligen Materials geschuldet, das in dem in der CT-Aufnahme verwendeten Wellenlängenbereich, nur wenig oder gar nicht absorbiert.

Typischer Weise ist in einem ESV mindestens ein Material der Beschichtung oder des Substrats in den CT-Daten "unsichtbar", d.h. nicht erfasst.

Die Prozessschritte der optischen Aufnahme, deren Verarbeitung zum Bestimmen der Geometrie, sowie die Indizierung der Elektrodenblätter können auch während des Stapelns der Elektrodenblätter zum ESV erfolgen, so dass hier eine besondere effiziente Verarbeitung gewährleistet ist.

Gemäß einer weiteren Ausführungsform der Erfindung, weist jedes Elektrodenblatt die beidseitige Beschichtung in einem Aktivbereich auf und das Substrat der Elektrodenblätter ist zumindest in einem Kontaktierbereich unbeschichtet.

Gemäß einer weiteren Ausführungsform der Erfindung ist vorgesehen, dass sich jedes Elektrodenblatt in einer dem Elektrodenblatt zugeordneten x-y-Ebene erstreckt, die durch eine x- und eine y-Achse eines Kartesischen Koordinatensystems aufgespannt wird und einer z-Achse, die entlang einer Stapelrichtung des ESV-Stapels zeigt.

Gemäß einer weiteren Ausführungsform der Erfindung ist vorgesehen, dass der Kontaktierbereich jedes Elektrodenblatts sich in einem Randbereich des Elektrodenblatts erstreckt und sich daran entlang einer Übergangskante anschließend der Aktivbereich des Elektrodenblattes erstreckt, wobei eine Lage der Übergangskante für jedes Elektrodenblatt zumindest anhand der ausgerichteten Geometrien der optischen Aufnahme bestimmt wird. Die Lage der Übergangskannte kann sofern in den Ct-Daten erfasst, alternativ oder ergänzend anhand der CT-Daten ermittelt werden.

Für die Bestimmung der Prozessfähigkeit und der Produktqualität sind diese Übergangskanten von Bedeutung, da anhand der Übergangskanten, eine Grad an Versatz, relative Verdrehung und Überlappung der Elektrodenblätter ermittelt werden kann.

Gemäß einer weiteren Ausführungsform der Erfindung, formt der Kontaktierbereich eine äußere Kante des Elektrodenblatts, wobei eine Lage der äußeren Kante für jedes Elektrodenblatt im ESV zumindest anhand der ausgerichteten Geometrien der optischen Aufnahme bestimmt wird.

Der Kontaktierbereich wird in Fachkreisen auch als "nackte Schulter" bezeichnet. Der Kontaktierbereich liegt typischer Weise zumeist an einem äußeren Bereich des Elektrodenblattes, damit eine Anschließbarkeit gewährleistet ist.

Die Bestimmung der äußeren Kante, entspricht daher einer äußeren Berandung des Elektrodenblattes im Bereich des Kontaktierbereichs, also der nackten Schulter.

Gemäß einer weiteren Ausführungsform der Erfindung, wird für jedes Elektrodenblatt zumindest anhand der ausgerichteten Geometrien der optischen Aufnahme eine Lage einer stumpfen Kante des Elektrodenblatts im ESV bestimmt, wobei die stumpfe Kante einer dem Kontaktierbereich gegenüberliegenden Kante des Elektrodenblattes entspricht.

Diese stumpfe Kante umfasst dabei insbesondere sowohl eine Kante des Substrats und eine Kante der beidseitigen Beschichtung, die idealerweise alle die gleiche Lage haben. In einigen Designs, kann allerdings auch im Bereich der stumpfen Kante eine Abstufung entlang der einer zweiten Übergangskante erfolgen, so dass das Substrat geringfügig über die beidseitige Beschichtung hinausragt. Entsprechend muss dann zur Ermittlung der Überlappung des Aktivbereichs und der Ablagegenauigkeit diese zusätzliche Abstufung mit berücksichtigt werden.

Insbesondere anhand der Lage der Übergangskante, der äußeren Kante und der stumpfen Kante für jedes Elektrodenblatt, kann die Lage jedes Elektrodenblattes mit hoher Präzision ermittelt werden, so dass die Ablagegenauigkeit, und damit die Prozessfähigkeit sowie die Produktqualität präzise ermittelt werden können.

Gemäß einer weiteren Ausführungsform der Erfindung ist vorgesehen, dass ein Überdeckungskriterium der Aktivbereiche der Elektrodenblätter insbesondere entlang der x-y-Ebene ermittelt wird, wobei dazu mittels der ermittelten Lagen der Übergangkanten der Elektrodenblätter und der ermittelten Lagen der stumpfen Kanten der Elektrodenblätter ein oder mehrere der folgenden ersten Versätze bestimmt werden:
- einen maximalen Versatz, insbesondere entlang der x-y-Ebene, insbesondere entlang der x- und/oder der y-Richtung, der Lage der Übergangkanten der Elektrodenblätter der ersten Art,
- einen maximalen Versatz, insbesondere entlang der x-y-Ebene, insbesondere entlang der x- und/oder der y-Richtung, der Lage der Übergangkanten der Elektrodenblätter der zweiten Art,
- einen maximalen Versatz, insbesondere entlang der x-y-Ebene, insbesondere entlang der x- und/oder der y-Richtung, der Lage der stumpfen Kanten der Elektrodenblätter der ersten Art,
- einen maximalen Versatz, insbesondere entlang der x-y-Ebene, insbesondere entlang der x- und/oder der y-Richtung, der Lage der stumpfen Kanten der Elektrodenblätter der zweiten Art,
- einen minimalen Versatz, insbesondere entlang der x-y-Ebene, insbesondere entlang der x- und/oder der y-Richtung, der Lage der Übergangskanten der Elektrodenblätter der ersten Art zu der Lage der stumpfen Kanten der Elektrodenblätter der zweiten Art;
- einen minimalen Versatz, insbesondere entlang der x-y-Ebene, insbesondere entlang der x- und/oder der y-Richtung, der Lage der Übergangskanten der Elektrodenblätter der zweiten Art zu der Lage der stumpfen Kanten der Elektrodenblätter der ersten Art.

Das Überdeckungskriterium wird durch eine Prüfung, in wie weit die Versätze in vordefinierten Toleranzbereichen liegen, ermittelt. Anhand dieser Versätze kann eine Prozessfähigkeit und/oder eine Produktqualität ermittelt werden. Diese Versätze informieren über die Lage der Elektrodenblätter im ESV entlang der x-y-Ebene so dass für jedes Elektrodenblatt bestimmt werden kann, ob es mit seinem Aktivbereich in einem Toleranzbereich liegt und /oder ob das Elektrodenblatt in einem Toleranzbereich für die Ecken/ Kanten für Elektrodenblätter der ersten oder zweiten Art liegt. Anhand dieser Bestimmung kann die Prozessfähigkeit und die Produktqualität ermittelt werden.

Der Versatz kann beispielsweise in Form von Abständen ermittelt werden.

Gemäß einer weiteren Ausführungsform der Erfindung wird eine Ablagegenauigkeit der Elektrodenblätter insbesondere bezüglich der x-y-Ebene ermittelt, wobei dazu mittels der ermittelten Lagen der äußeren Kanten der Elektrodenblätter und der ermittelten Lagen der stumpfen Kanten der Elektrodenblätter ein oder mehrere der folgenden zweiten Versätze bestimmt werden:
- einen maximalen Versatz insbesondere entlang der x-y-Ebene, insbesondere entlang der x- und/oder der y-Richtung, der Lage der äußeren Kanten der Elektrodenblätter der ersten Art,
- einen maximalen Versatz insbesondere entlang der x-y-Ebene, insbesondere entlang der x- und/oder der y-Richtung, der Lage der äußeren Kanten der Elektrodenblätter der zweiten Art,
- einen maximalen Versatz insbesondere entlang der x-y-Ebene, insbesondere entlang der x- und/oder der y-Richtung, der Lage der stumpfen Kanten der Elektrodenblätter der ersten Art,
- einen maximalen Versatz insbesondere entlang der x-y-Ebene, insbesondere entlang der x- und/oder der y-Richtung, der Lage der stumpfen Kanten der Elektrodenblätter der zweiten Art,
- einen minimalen Versatz insbesondere entlang der x-y-Ebene, insbesondere entlang der x- und/oder der y-Richtung, der Lage der äußeren Kanten der Elektrodenblätter der ersten Art zu der Lage der stumpfen Kanten der Elektrodenblätter der zweiten Art;
- einen minimalen Versatz insbesondere entlang der x-y-Ebene, insbesondere entlang der x- und/oder der y-Richtung, der Lage der äußeren Kanten der Elektrodenblätter der zweiten Art zu der Lage der stumpfen Kanten der Elektrodenblätter der ersten Art.

Insbesondere wird die Ablagegenauigkeit aus den genannten Versätzen ermittelt, insbesondere durch Prüfung ob die Versätze in vordefinierten Toleranzbereichen liegen.

Der maximale und der minimale Versatz wird dabei aus der Menge der Versätze aller Elektrodenblätter bzgl. der jeweiligen Kante ermittelt.

Gemäß einer weiteren Ausführungsform der Erfindung ist vorgesehen, dass die Lage der Übergangskante eine erste Lage der Übergangskante für eine erste Seite der beidseitigen Beschichtung und eine zweite Lage der Übergangkante für eine zweite der ersten entlang der Stapelrichtung gegenüberliegenden Seite der beidseitigen Beschichtung des Elektrodenblatts umfasst, wobei die erste und die zweite Lage der Übergangskante zumindest anhand der ausgerichteten Geometrien der optischen Aufnahme bestimmt wird.

Dies erlaubt eine seitenselektive Ermittlung der Übergangskante und eine Abweichung der Lage dieser Kanten kann in weiteren Auswertungsschritten berücksichtigt werden.

Gemäß einer weiteren Ausführungsform der Erfindung ist vorgesehen, dass die Lage der Übergangskante aus einem Mittelwert der ersten und der zweiten Lage der Übergangskante ermittelt wird, oder wobei zur Ermittlung der ersten Versätze die erste oder die zweite Lage der Übergangskante der Lage der Übergangskante zugeordnet wird.

Gemäß einer weiteren Ausführungsform der Erfindung ist vorgesehen, dass jeder Versatz für jedes Elektrodenblatt für zwei entlang der y-Achse, insbesondere zwei lediglich entlang der y-Achse gegenüberliegende Eckbereiche des Elektrodenblatts bestimmt wird, wobei für jeden der Versätze ein Toleranzbereich vorgegeben ist, wobei für jede Ecke und deren ermittelten und zugeordneten Versätze ermittelt wird, ob zumindest einer der ermittelten und zugeordneten Versätze außerhalb des ihm zugeordneten Toleranzbereich liegt, insbesondere wobei wenn zumindest einer der Versätze außerhalb des ihm zugeordneten Toleranzbereichs liegt, der ESV einem Ausschuss zugeordnet wird.

Auf diese Weise kann anhand der ermittelten Verätze bestimmt werden ob der ESV ggf. aussortiert werden muss, wenn er nicht bestimmte Qualitätskriterien erfüllt.

Gemäß einer weiteren Ausführungsform der Erfindung ist vorgesehen, dass die Übergangskante zumindest eines Elektrodenblatts insbesondere entlang der y-Achse schräg verläuft, so dass die ersten Versätze mit Bezug zur Lage der schrägverlaufenden Übergangskante für jeden der zwei Eckbereiche unterschiedlich groß sind.

Gemäß einer weiteren Ausführungsform der Erfindung ist vorgesehen, dass die Lage der Übergangskante der Elektrodenblätter einem Mittelwert aus allen für das jeweilige Elektrodenblatt ermittelten Lagen der Übergangskante entspricht, so dass der Lage robust bezüglich Abplatzungen oder rauen Übergangskantenverlauf bestimmbar bleibt.

Dieser Aspekt erlaubt es eine Kantenverlauf zu bestimmen, der robust gegenüber Rauheit und kleiner Kantendefekten ist.

Gemäß einer weiteren Ausführungsform der Erfindung ist vorgesehen, dass die Lage der Übergangskante der Elektroden der ersten Art nur aus der optischen Aufnahme bestimmt wird.

Dadurch kann die Übergangskante mit besonders hoher Genauigkeit bestimmt werden, insbesondere, da diese Kante nicht oder nur schlecht in den CT-Daten erfasst ist und damit nicht oder nur schlecht zu erkennen ist.

Gemäß einer weiteren Ausführungsform der Erfindung ist vorgesehen, dass die Lage der äußeren Kante der Elektrodenblätter der zweiten Art nur aus der optischen Aufnahme bestimmt wird.

Dadurch kann die äußere Kante mit besonders hoher Genauigkeit bestimmt werden, insbesondere, da diese Kante nicht oder nur schlecht in den CT-Daten erfasst ist und damit nicht oder nur schlecht zu erkennen ist.

Gemäß einem weiteren Aspekt der Erfindung ist ein System vorgesehen, das zur Bestimmung von Qualitäts- und Prozessparametern eines ESV zumindest die folgenden Komponenten aufweist:
- eine optische Erfassungseinheit aufweist, die dazu eingerichtet ist, optische Aufnahmen von Elektrodenblätter von einer ersten und einer zweiten Seite des Elektrodenblatts zu machen,
- eine ESV-Stapeleinrichtung, die dazu eingerichtet ist, die Elektrodenblätter zu einem ESV zu stapeln, wobei das System dazu eingerichtet ist, jedes Elektrodenblatt zu indizieren, so dass eine Zuordnung jedes Elektrodenblatts aus den optischen Aufnahmen im ESV erfolgt,
- eine computer-tomografische Aufnahmeeinrichtung, die dazu eingerichtet ist, eine dreidimensionale Aufnahme des ESV-Stapels zu erzeugen,
dadurch gekennzeichnet, dass das System eine Computer umfasst, der dazu eingerichtet ist, die Komponenten des Systems über Schnittstellen zu steuern und das Verfahren nach einem der vorhergehenden Ansprüche durchzuführen.

Gemäß einem weiteren Aspekt der Erfindung ist ein Computerprogramm vorgesehen, das Computerprogrammcode umfasst, der wenn er auf einem Computer ausgeführt wird, insbesondere wenn er auf dem Computer des Systems ausgeführt wird, den Computer dazu veranlasst, das erfindungsgemäße Verfahren durchzuführen.

Unter einem Computerprogramm wird im Kontext dieser Spezifikation insbesondere auch ein Computerprogammprodukt verstanden, also ein auf einem nicht transitorischem Speichermedium gespeicherter Computerprogrammcode.

Die Erfindung wird im Folgenden anhand des in den beiliegenden Zeichnungen dargestellten Ausführungsbeispiels erläutert.

Es zeigen
Fig. 1: eine Ausführungsform eines System zur Durchführung des erfindungsgemäßen Verfahrens;
Fig. 2: ein beispielhafter Schnitt entlang einer x-z- Ebene eines Bereichs einer CT-Aufnahme;
Fig. 3: eine schematische Darstellung der Elektrodenblätter erster Art;
Fig. 4: eine schematische Darstellung der Elektrodenblätter zweiter Art;
Fig. 5: eine schematische Darstellung eines Schnitts durch einen ESV mit Bestimmung der Versätze der Elektrodenblätter; sowie
Fig. 6 eine schematische Darstellung der Elektrodenblätter erster Art mit unterschiedlichen Kantenverläufen

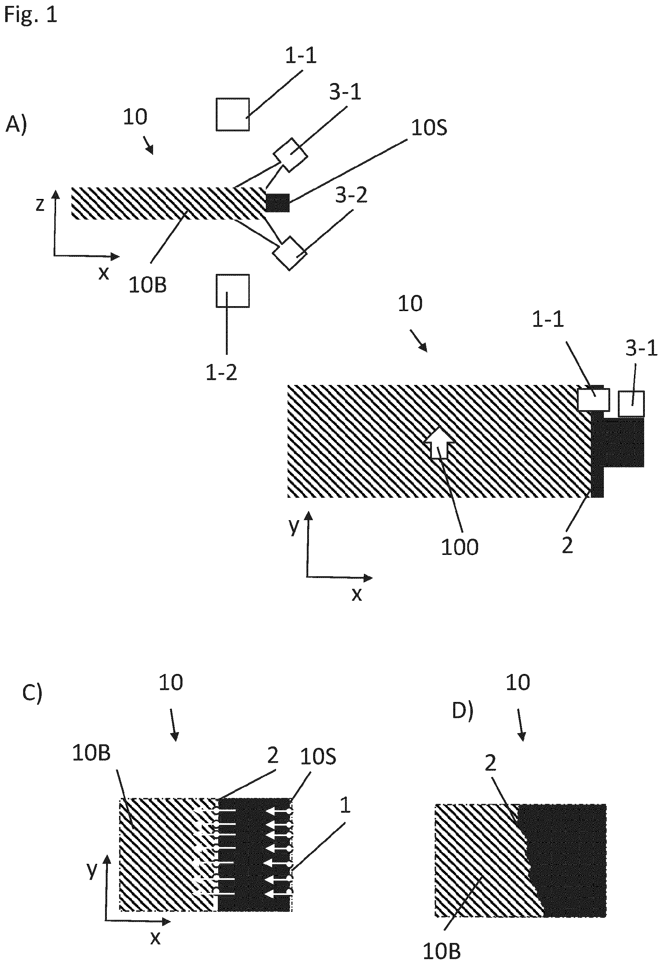

In Fig. 1 A) ist eine Seitenansicht eines Elektrodenblatts 10 samt einer optischen Erfassungseinheit des Systems schematisch dargestellt. Die optische Erfassungseinheit umfasst dabei zwei Zeilenkameras 1-1,1-2, die in Bezug auf ein zugeordnetes Koordinatensystem, entlang der z-Achse versetzt sind und daher jeweils eine Seite eines aufzunehmenden Elektrodenblatts 10 optisch erfassen. Das Elektrodenblatt 10 erstreckt sich entlang einer x-y Ebene und wird entlang der y-Richtung (in die Bildebene hinein oder heraus) bewegt.

Jeder Kamera ist eine Lichtquelle 3-1,3-2 zugeordnet, die das Elektrodenblatt 10 auf jeweils einer Seite beleuchten, um gleichbleibende Aufnahmebedingungen zu gewährleisten.

Das Elektrodenblatt 10 umfasst ein Substrat 10S, das sich entlang der x-y- Eben erstreckt und auf beiden Seiten flächig von einer Beschichtung 10B bedeckt ist, die sich ebenfalls entlang der x-y Ebene erstreckt. Das Substrat 10S und die beidseitige Beschichtung 10B sind aus einem unterschiedlichen Material gefertigt.

Bei der Bewegung des Elektrodenblatts 10 erfassen die Zeilenkameras 1-1,1-2 zumindest in einem Aufnahmebereich sowohl die Geometrie der beidseitigen Beschichtung 10B als auch des sichtbaren, d.h. unbeschichteten Teil des Substrats 10S, der auch als nackte oder blanke Schulter bezeichnet wird. Der beschichtete Teil des Elektrodenblatts 10 wird im Kontext der vorliegenden Spezifikation auch als Aktivbereich bezeichnet, während hingegen der unbeschichtete Teil des Elektrodenblatts10, der die blanke Schulter bildet als Kontaktierbereich bezeichnet wird.

In Fig. 1B) ist eine Aufsicht der gleichen Szene wie in Fig. 1a) gezeigt, in der eine sich entlang der y-Achse ersteckende Übergangskante 2 des Elektrodenblatts 10 erkennbar ist. Die Übergangskante 2 ist die Kante, die am Rand der Beschichtung 10B zum Aktivbereich entsteht. Die Zeilenkameras 1-1,1-2 erfassen zumindest diesen Bereich aber insbesondere auch eine Vielzahl anderer Bereiche, während das Elektrodenblatt 10 entlang der y-Achse verlagert wird.

In Fig. 1C) ist eine ermittelte optische Aufnahme des von einer Zeilenkamera erfassten Bereichs der Übergangkante 2 gezeigt. Die Überganskante 2 aber auch eine äußere Kante 1 des Substrats 10S wird an einer Vielzahl an Stellen entlang der y-Richtung erfasst. Anhand der Stellen wird ein Kantenverlauf durch beispielsweise lineare Interpolation ermittelt. Auf dieses Weise kann für beide Seiten des Elektrodenblatts 10 ein Kantenverlauf der Übergangskante 2 und der äußeren Kante 1 ermittelt werden, wobei der Kantenverlauf der äußeren Kante 1 für beide Seiten identisch ist. Durch die Aufnahmen kann ein wesentlicher Teil der Geometrie des Elektrodenblatts 10 erfasst werden.

In Fig. 1D) ist ein Kantenverlauf der Überganskante 2 dargestellt, der eine erhöhte Rauigkeit aufweist. Aus diesem Grund ist die Erfassung der Übergangskante 2 an einer Vielzahl an Stellen entlang der y-Achse vorteilhaft, da so eine verbesserte Ermittlung des Verlaufs oder eines interpolierten Verlaufs der Übergangskante 2 erfolgen kann.

Zusätzlich kann parallel eine optische Vermessung der vollständigen Elektrodenblattgeometrie erfolgen, wie beispielsweise durch Ermitteln einer Länge (in x-Richtung) und einer Breite (in y-Richtung).

Dies kann mittels einer weiteren nicht-dargestellte Kamera-Anordnung samt Lichtquellen, die beispielsweise ebenfalls zwei entsprechend angeordnete Zeilenkameras umfasst erfolgen. So kann insbesondere eine stumpfe Kante des Elektrodenblatts 10 entlang der x-Achse gegenüber des Kontaktierbereichs erfasst werden. Dies ermöglicht Geometrien der Elektrodenblätter zu erfassen, die in der x-y Ebene um 180° gedreht angeordnet sind.

Ebenso können durch die beidseitige Ermittlung der Übergangskanten 2 gegebenenfalls Versätze der beiden Beschichtungen an einem Elektrodenblatt 10 festgestellt werden, was in weiteren Auswertungen berücksichtigt werden kann.

Die optisch erfassten Bereiche der Elektrodenblätter 10 erlauben es, anhand der optischen Aufnahmen eine Geometrie des Elektrodenblattes 10 zu ermitteln, zumindest was die relevanten Kantenverläufe betrifft.

Die aufgenommenen Elektrodenblätter 10 werden sodann zu einem ESV-Stapel zusammengefasst, der im Wesentlichen entlang der z-Richtung gestapelt ist. Der ESV 4 umfasst dabei Elektrodenblätter 10 einer ersten und einer zweiten Art. Dies sind typischer Weise Elektrodenblätter, die die Anode formen, also Anodenblätter, und Elektrodenblätter, die die Kathoden formen, also Kathodenblätter.

Damit die Elektrodenblätter 10 hinterher im Stapel den optischen Aufnahmen zugeordnet werden können, werden die Elektrodenblätter 10 dahingehend indiziert, dass eine Stapelposition, z.B. mittels einer Nummer, anhand der Indizierung feststellbar ist.

Der ESV Stapel wird zumindest bereichsweise mittels einer computer-tomografischen Aufnahmeeinrichtung dreidimensional erfasst.

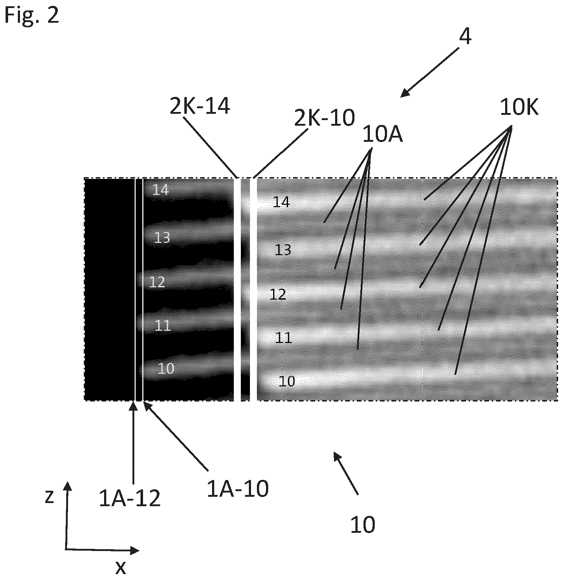

In Fig. 2 ist eine CT-Aufnahme für einen Bereich eines ESV 4 Stapels in Schnittansicht entlang einer x-z Ebene dargestellt. Dargestellt sind die äußeren Kantenbereiche der Anodenblätter 10A (nummeriert von 14 bis 10), und deren anhand der ermittelten äußeren Kanten 1A-10, 1A-12 der Elektrodenblätter 10 maximaler Versatz entlang der x-Richtung. Ebenso ist ein maximaler Versatz entlang der x-Richtung für die Übergangskanten Kanten der Kathodenblätter 10K ( ebenfalls nummeriert von 14 bis 10) dargestellt.

Diese Versätze werden sodann mit einem Toleranzbereich verglichen, der die Toleranzen für Versätze bzw. die Lage der Elektrodenblätter angibt. Wenn die Versätze in den Toleranzbereichen liegen, erfüllt der ESV 4 die vordefinierten Gütekriterien. Wenn dies nicht der Fall ist, wird der ESV 4 gegebenenfalls einem Ausschuss zugeordnet.

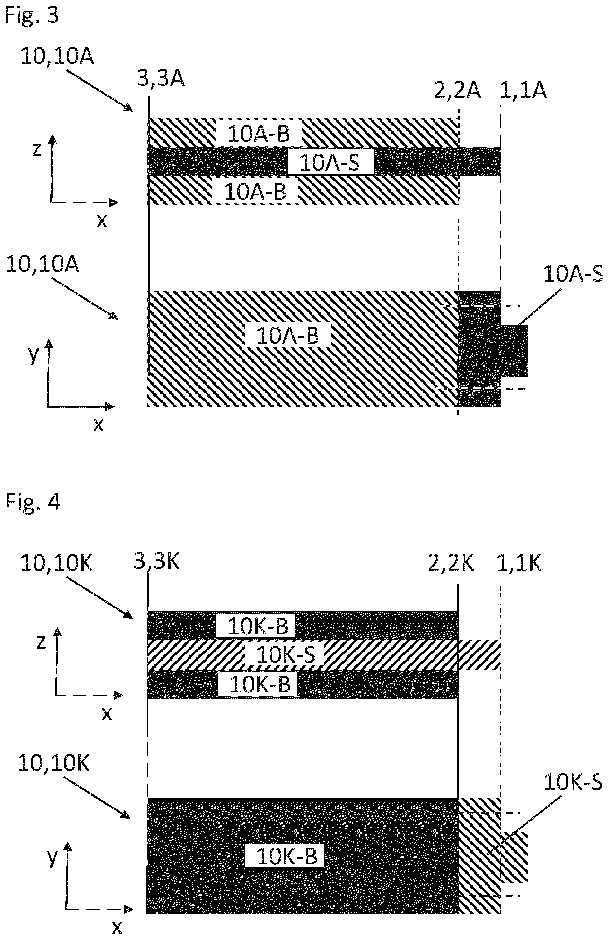

In Fig. 3 und 4 sind jeweils Elektrodenblätter der ersten bzw. der zweiten Art 10A, 10K dargestellt. In Fig. 3 sind beispielhaft zwei schematische Schnittansichten eines Anodenblatts 10A dargestellt, wobei ebenfalls eine stumpfe Kante 3,3A, eine Übergangskante 2,2A und eine äußere Kante 1,1A des Anodenblatts 10A dargestellt ist. Das Anodenblatt 10A umfasst eine beidseitige Beschichtung 10A-B, und ein Substrat 10A-S. Das Material der Beschichtung 10AB, z.B. Graphit, ist in den CT-Aufnahmen nicht erfasst und ist daher in einer CT-Aufnahme eines ESV unsichtbar bzw. schwer erkennbar. Das Material des Substrats 10A-S, z.B. Kupfer, hingegen bietet einen ausreichend hohen CT-Kontrast, so dass das Substrat in einer CT-Aufnahme des ESV sichtbar ist.

Analog sind in Fig. 4 beispielhaft zwei schematische Schnittansichten eines Kathodenblatts 10K dargestellt. Das Kathodenblatt umfasst eine beidseitige Beschichtung 10K-B, und ein Substrat 10K-S, wobei auch hier eine stumpfe Kante 3,3K, eine Übergangskante 2,2K und eine äußere Kante 1,1K des Kathodenblatts 10K angedeutet ist. Das Material des Substrats 10K-S, z.B. Aluminium, ist in den CT-Aufnahmen nicht erfasst und ist daher in einer CT-Aufnahme eines ESV unsichtbar bzw. schwer erkennbar. Das Material der Beschichtung 10K-B, z.B. Lithium, hingegen bietet einen ausreichend hohen CT-Kontrast, so dass die beidseitige Beschichtung 10K-B in einer CT-Aufnahme des ESV sichtbar ist.

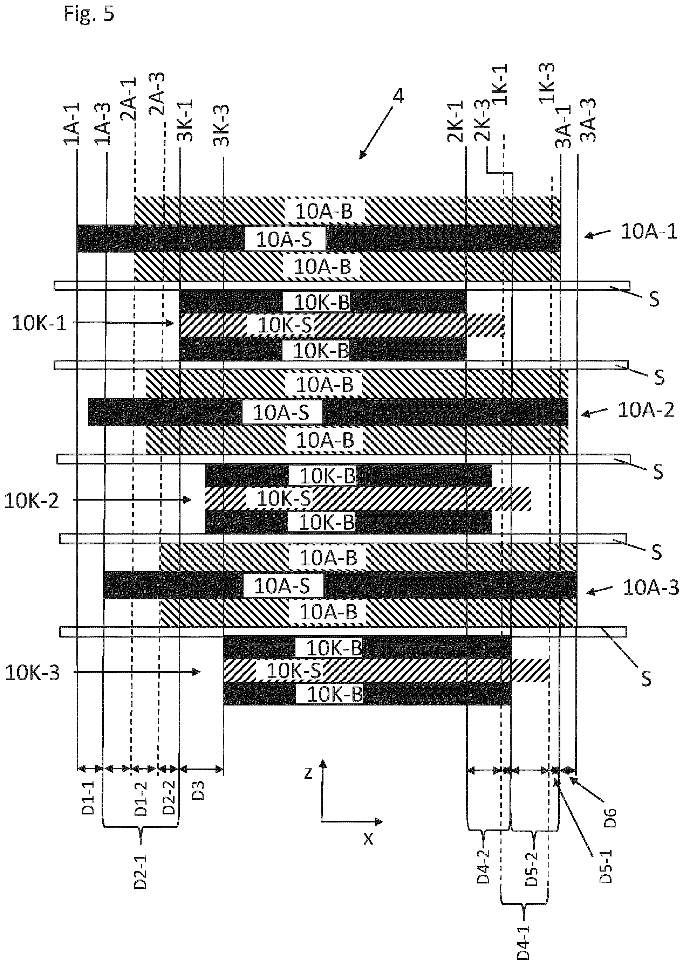

In Fig. 5 ist ein schematischer Schnitt durch einen ESV 4 entlang der x-z- Ebene dargestellt. In diesem Fall umfasst der ESV 4 lediglich drei Anoden- und drei Kathodenblätter 10A-1,10A-2, 10A-3, 10K-1, 10K-2, 10K-3 um die Illustration nicht unnötig komplex zu gestalten.

Wie weiterhin in Fig. 5 dargestellt sind die Anodenblätter 10A-1,10A-2,10A-3 und die Kathodenblätter 10K-1,10K-2,10K-3 in der x-y Ebene um 180° gedreht zueinander gestapelt, so dass die äußeren Kanten 1A-1, 1A-3, 1K-1, 1K-3 in entgegengesetzte x-Richtungen zeigen. Zwischen den Elektrodenblättern sind im ESV 4 noch Separatorschichten S angeordnet.

Da wie zu den Figuren 3 und 4 beschrieben, das Substrat der Kathodenblätter und die Beschichtung der Anodenblätter in der CT Aufnahme unsichtbar sind, können ausgewählte Kanten bzw. Geometrien der Elektrodenblätter nurs anhand der optischen Daten ermittelt bzw. zugeordnet werden.

Die Nomenklatur der Kanten erfolgt in diesem Beispiel gemäß der folgenden Logik:
Die erste Ziffer bestimmt die Kante, also insbesondere die äußere Kante (1), die Übergangskante (2) und die stumpfe Kante (3).

Der folgende Buchstabe bestimmt die Art des Elektrodenblatts, hier Anode (A) oder Kathode (K). Die letzte Ziffer deutet auf die Position im ESV hin. Je weiter oben das Elektrodenblatt angeordnet ist, desto niedriger die Nummer.

So bezeichnet "2A-3" die Übergangskante des Anodenblattes das im gezeigten ESV von allen Anodenblättern zuunterst angeordnet ist. "1K-1" verweist auf die äußere Kante des obersten Kathodenblattes.

Wie aus Fig. 5 hervorgeht, können die Übergangskanten 2A-1,2A-3 der Anodenblätter 1A-1, 1A-3 sowie die äußeren Kanten 1K-1,1K-3 der Kathodenblätter lediglich anhand der zugeordneten optischen Daten ermittelt werden.

Dazu werden die Geometrien der optischen Aufnahmen mit den aus der computer-tomografischen Aufnahme bestimmten Geometrien der Elektrodenblätter im ESV 4 ausgerichtet und ggf. skaliert. Da für jedes Elektrodenblatt zumindest eine Geometrie - die des Substrats oder die der Beschichtung in der CT-Aufnahme sichtbar ist, kann für jedes Elektrodenblatt eine Transformation ermittelt werden, anhand derer die aus den optischen Aufnahmen ermittelten Geometrien in Übereinstimmung mit den aus den CT-Daten ermittelten Geometrien gebracht werden, wobei für die lediglich in den optischen Aufnahme erfassten Geometrien die entsprechende Transformation für das Elektrodenblatt angewendet wird, so dass eine sehr gute Ermittlung der Geometrie und der Lage aller Substrate und Beschichtungen angenommen werden kann.

Um nun verschiedene Gütekriterien des ESV zu ermitteln, sind insbesondere die Versätze verschiedener Kanten der Elektrodenblätter relativ zueinander in der x-y-Ebene, insbesondere entlang derx-Richtung, relevant.

Ebenso kann eine Verdrehung relativ zu einer Stapelachse oder den anderen Elektrodenblättern ermittelt werden.

Um beispielsweise das Gütekriterium der Prozessfähigkeit zu bestimmen, werden die folgenden Abstände bzw. Versätze ermittelt:
- D1-1: Einem maximalen Versatz der äußeren Kante 1A-1,1A-3 der Anodenblätter 10A-1, 10A-3 zueinander;
- D2-1: Einem minimalen Versatz der äußeren Kante 1A-3 der Anodenblätter 10A-3 zur stumpfen Kante 3K-1 der Kathodenblätter 10K-1, d.h. der kleineste Versatz aller Versätze von äußeren Kanten der Anodenblätter zu den stumpfen Kanten der Kathodenblättern.
- D3: Einem maximalen Versatz der stumpfen Kanten 3K-1, 3K-3 der Kathodenblätter zueinander.
- D4-1: Einem maximalen Versatz der äußeren Kanten 1K-1, 1K-3 der Kathodenblätter.
- D5-1: Einem minimalen Versatz der äußeren Kante 1K-3 der Kathodenblätter 10K-3 zur stumpfen Kante 3A-1 der Anodenblätter 10A-1.
- D6: Einem maximalen Versatz der stumpfen Kanten 3A-1,3A-3 der Anodenblätter 10A-1,10A-3 zueinander.

Dabei sind die äußeren Kanten 1K-1,1K-3 der Kathodenblätter 10K-1, 10K-3 lediglich aus den optischen Aufnahmen bestimmbar. Folglich erlaubt das erfindungsgemäße Verfahren trotz fehlender Information dieser Kantenlangen aus den CT-Daten eine Bestimmung der Versätze D4-1 und D5-1 und damit eine Bestimmung des Gütekriterium der Prozessfähigkeit.

Anhand der so bestimmten Versätze kann eine Lage, d.h. insbesondere eine Information einer Position und Orientierung im ESV 4 jedes Elektrodenblattes 10 ermittelt werden. Vorteilhafter Weise werden die oben aufgeführten Versätze zur Ermittlung der Prozessfähigkeit zumindest für jeden Eckbereich der Elektrodenblätter 10 ermittelt, d.h. jede Kante wird an zumindest zwei im Randbereich liegenden, insbesondere außenliegenden (entlang der y-Achse) Stellen des Elektrodenblatts 10 bestimmt. Jeden der oben aufgeführten Versätze zur Ermittlung der Prozessfähigkeit ist für jeden Eckbereich ein insbesondere vordefinierter Toleranzbereich zugeordnet, innerhalb dessen der jeweilige Versatz liegen soll. Die Prozessfähigkeit gibt insbesondere darüber Auskunft, in wie weit die Außenbereiche der Elektrodenblätter 10 regelmäßig und präzise im ESV 4 angeordnet sind.

Zusätzlich zur Prozessfähigkeit kann auch ein Qualitätskriterium in Form eines Überdeckungskriteriums bestimmt werden, das Auskunft über eine Überdeckungsfläche der Aktivbereiche der Elektrodenblätter 10 gibt.

Die Überdeckungsfläche entspricht dabei insbesondere der Schnittmenge aller auf eine x-y Ebene projizierten Aktivbereiche der Elektrodenblätter.

Zur Bestimmung der Überdeckungskriteriums werden insbesondere die folgenden Versätze aus den Geometrien der Elektrodenblätter ermittelt:
- D1-2: Einem maximalen Versatz der Übergangskante 2A-1,2A-3 der Anodenblätter 10A-1, 10A-3 zueinander;
- D2-2: Einem minimalen Versatz der Übergangskante 2A-3 der Anodenblätter 10A-3 zur stumpfen Kante 3K-1 der Kathodenblätter 10K-1, d.h. der kleineste Versatz aller Versätze von Übergangskanten Kanten der Anodenblätter zu den stumpfen Kanten der Kathodenblättern.
- D3: Einem maximalen Versatz der stumpfen Kanten 3K-1, 3K-3 der Kathodenblätter zueinander.
- D4-2 Einem maximalen Versatz der Übergangskanten 2K-1, 2K-3 der Kathodenblätter.
- D5-2: Einem minimalen Versatz der Übergangskante 2K-3 der Kathodenblätter 10K-3 zur stumpfen Kante 3A-1 der Anodenblätter 10A-1.
- D6: Einem maximalen Versatz der stumpfen Kanten der Anodenblätter zueinander.

Dabei sind die Überganskanten 2A-1, 2A-3 der Anodenblätter lediglich aus den optischen Aufnahmen bestimmbar. Folglich erlaubt das erfindungsgemäße Verfahren trotz fehlender Information dieser Kantenlangen aus den CT-Daten eine Bestimmung der Versätze D1-2 und D2-2 und damit eine Bestimmung des Überdeckungskriteriums.

Anhand der so bestimmten Versätze kann eine Lage, d.h. insbesondere eine Information einer Position und Orientierung im ESV 4 jedes Elektrodenblattes ermittelt werden.

Vorteilhafter Weise werden die oben aufgeführten Versätze zur Ermittlung des Überdeckungskriteriums zumindest für jeden Eckbereich der Elektrodenblätter ermittelt, d.h. jede oben aufgeführten Kanten wird an zumindest zwei im Randbereich liegenden, insbesondere außenliegenden (entlang der y-Achse) Stellen des Elektrodenblatts bestimmt. Jedem der oben aufgeführten Versätze zur Ermittlung des Überdeckungskriteriums ist für jeden Eckbereich ein insbesondere vordefinierter (vom Toleranzbereich der Ablagegenauigkeit / Prozessfähigkeit verschiedener) Toleranzbereich zugeordnet, innerhalb dessen der jeweilige Versatz liegen soll.

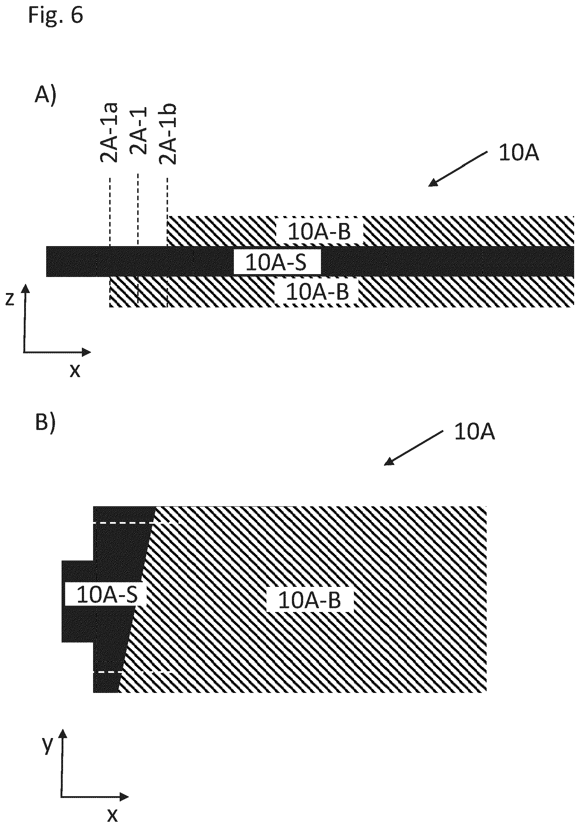

Die Ermittlung in zumindest zwei Eckbereichen erlaubt es, auch bzgl. der y-Achse schrägverlaufende Kantenverläufe zu berücksichtigen, vgl. Fig. 6B.

Die weitere Verwendung des ESV kann davon abhängen, ob die Überdeckungskriterium erfüllt ist, also alle Versätze in allen Eckbereichen in den vorgesehenen Toleranzbereichen liegen.

In Bezug auf die Überganskante eines Elektrodenblattes können folgende verschiedene Situationen berücksichtigt werden.

Da die beidseitige Beschichtung auf beiden Seiten des Substrats von der Aufnahmeeinrichtung erfasst werden kann, kann für jede Seite eine Übergangskante 2A-1a, 2A-1b ermittelt werden. Um dem Elektrodenblatt eine Übergangskante zuzuordnen, kann beispielsweise ein Mittelwert 2A-1, also ein mittlerer Verlauf der Kante, aus den beiden Übergangskanten zur weiteren Bearbeitung angewendet werden, siehe Fig. 6.A

Alternativ werden beide Kanten in den weiteren Bearbeitungsschritten des Verfahrens berücksichtigt, so dass beispielsweise von zwei resultierenden Aktivbereichüberdeckungsflächen die kleinere Überdeckungsfläche verwendet wird, um das Gütekriterium zu bestimmen.

### Bezugszeichenliste

- 1: äußere Kante Elektrodenblatt
- 1-1,1-2: Zeilenkameras
- 1A, 1A-1, 1A-3, 1A-10, 1A-12: äußere Kante Elektrodenblatt erster Art
- 1K, 1K-1, 1K-3: äußere Kante Elektrodenblatt zweiter Art
- 2: Übergangskante Elektrodenblatt
- 2A, 2A-1, 2A-3: Übergangskante Elektrodenblatt erster Art
- 2A-1a, 2A-1b: eine Seite der Übergangskante
- 2K, 2K-1, 2K-3, 2K-10, 1K-14: Überganskante Elektrodenblatt zweiter Art
- 3: stumpfe Kante
- 3-1,3-2: Lichtquellen
- 3A, 3A-1, 3A-3: stumpfe Kante Elektrodenblatt erster Art
- 3K, 3K-1, 3K-3: stumpfe Kante Elektrodenblatt zweiter Art
- 4: ESV
- 10: Elektrodenblatt
- 10A, 10A-1, 10A-2, 10A-3: Elektrodenblatt erster Art
- 10B: Beschichtung des Elektrodenblatts
- 10K, 10K-1, 10K-2, 10K-3: Elektrodenblatt zweiter Art
- 10A-B: Beschichtung des Elekstrodenblatts erster Art
- 10A-S: Substrat des Elektrodenblatts erster Art
- 10K-B: Beschichtung des Elektrodenblatts zweiter Art
- 10K-S: Substrat des Elektrodenblatts zweiter Art
- 10S: Substrat des Elektrodenblatts
- 100: Bewegungsrichtung
- D1-1: maximaler Versatz der äußere Kanten der Elektrodenblätter erster Art zueinander
- D1-2: maximaler Versatz der Übergangskanten der Elektrodenblätter erster Art zueinander
- D2-1: minimaler Versatz der äußeren Kanten der Elektrodenblätter erster Art zu den stumpfen Kanten der Elektrodenblätter zweiter Art
- D2-2: minimaler Versatz der Übergangskanten der Elektrodenblätter erster Art zu den stumpfen Kanten der Elektrodenblätter zweiter Art
- D3: maximaler Versatz der stumpfen Kanten der Elektrodenblätter zweiter Art zueinander
- D4-1: maximaler Versatz der äußere Kanten der Elektrodenblätter zweiter Art zueinander
- D4-2: maximaler Versatz der Übergangskanten der Elektrodenblätter zweiter Art zueinander
- D5-1: minimaler Versatz der äußeren Kanten der Elektrodenblätter zweiter Art zu den stumpfen Kanten der Elektrodenblätter erster Art
- D5-2: minimaler Versatz der Übergangskanten der Elektrodenblätter zweiter Art zu den stumpfen Kanten der Elektrodenblätter erster Art
- D6: maximaler Versatz der stumpfen Kanten der Elektrodenblätter erster Art zueinander
- S: Separatorschicht

## Patentansprüche

1. Ein Verfahren zur Bestimmung einer Lage von Elektrodenblättern (10) in einem Elektroden-Separator-Verbund, ESV (4), wobei die Elektrodenblätter (10) zumindest zwei Komponenten aufweisen, nämlich ein Substrat (10S) und eine beidseitige Beschichtung (10B) des Substrats (10S) wobei die Elektrodenblätter (10) zumindest eine erste und eine zweite Art von Elektrodenblätter (10A,10K) umfassen, wobei das Verfahren die folgenden Schritte umfasst:
- Zumindest bereichsweise Optisches Aufnehmen jedes Elektrodenblatts (10,10A,10K) in einem oder mehreren Aufnahmebereichen;
- Anhand der optischen Aufnahme Bestimmen zumindest eines Bereichs einer Geometrie des Substrats (10S) und zumindest eines Bereichs einer Geometrie der beidseitigen Beschichtung (10B) des Substrats (10S);
- Indizierung jedes Elektrodenblatts (10,10A, 10K), so dass eine Zuordnung jedes Elektrodenblatts (10,10A,10K) und den dazu bestimmten Geometrien aus den optischen Aufnahmen im ESV (4) erfolgen kann;
- Stapeln der Elektrodenblätter (10,10A,10K) zu einem ESV (4);
- Computer-tomografisches Erfassen zumindest einer der zwei Komponenten der Elektrodenblätter der ersten Art (10A) im ESV (4) und zumindest einer der zwei Komponenten der Elektrodenblätter der zweiten Art (10K) im ESV (4) in einer computer-tomografischen Aufnahme;
- Anhand der computer-tomografischen Aufnahme zumindest bereichsweise Bestimmen einer Geometrie der jeweiligen erfassten Komponente;
- Ausrichten der jeweiligen Geometrien aus den optischen Aufnahmen mit den aus der computer-tomografischen Aufnahme bestimmten Geometrien der Elektrodenblätter (10,10A,10K) im ESV (4);
- Ermitteln einer Lage des Substrats (10S) jedes Elektrodenblatts (10,10A,10K) und dessen beidseitiger Beschichtung, wobei die Lage von nicht-erfassten Komponenten in der computer-tomografischen Aufnahme aus den ausgerichteten Geometrien der optischen Aufnahme ermittelt werden, so dass von allen Komponenten der Elektrodenblätter des ESV (4) eine Lage im ESV (4) ermittelt wird.

2. Das Verfahren gemäß Anspruch 1, **dadurch gekennzeichnet, dass** bei Elektrodenblättern der ersten Art (10A) die Beschichtung (10B) des Elektrodenblattes (10A) computer-tomografisch nicht erfasst wird, und bei Elektrodenblättern der zweiten Art (10K) das Substrat (10S) computer-tomografisch nicht erfasst wird.

3. Das Verfahren nach Anspruch1 oder 2, **dadurch gekennzeichnet, dass** jedes Elektrodenblatt die beidseitige Beschichtung in einem Aktivbereich aufweist und wobei das Substrat (10S) der Elektrodenblätter (10) zumindest in einem Kontaktierbereich unbeschichtet ist.

4. Das Verfahren gemäß Anspruch 3, **dadurch gekennzeichnet, dass** der Kontaktierbereich jedes Elektrodenblatts (10,10A,10K) sich in einem Randbereich des Elektrodenblatts erstreckt und sich daran entlang einer Übergangskante (2,2A,2K) anschließend der Aktivbereich des Elektrodenblattes (10,10A, 10K), wobei eine Lage der Übergangskante (2,2A,2K) für jedes Elektrodenblatt (10, 10A, 10K) zumindest anhand der ausgerichteten Geometrien der optischen Aufnahme bestimmt wird.

5. Das Verfahren gemäß Anspruch 3 oder 4, **dadurch gekennzeichnet, dass** der Kontaktierbereich eine äußere Kante (1,1A,1K) des Elektrodenblatts (10,10A,10K) formt wobei eine Lage der äußeren Kante (1,1A,1K) für jedes Elektrodenblatt (10,10A,10K) im ESV (4) zumindest anhand der ausgerichteten Geometrien der optischen Aufnahme bestimmt wird.

6. Das Verfahren nach einem der Ansprüche 3 bis 5, **dadurch gekennzeichnet, dass** für jedes Elektrodenblatt (10,10A,10K) zumindest anhand der ausgerichteten Geometrien der optischen Aufnahme eine Lage einer stumpfen Kante (3, 3A,3K) des Elektrodenblatts (10,10A,10K) im ESV (4) bestimmt wird, wobei die stumpfe Kante (3,3A,3K) einer dem Kontaktierbereich gegenüberliegenden Kante des Elektrodenblattes (10,10A,10K) entspricht.

7. Das Verfahren nach zumindest den Ansprüchen 4 und 6, **dadurch gekennzeichnet, dass** ein Überdeckungskriterium der Aktivbereiche der Elektrodenblätter (10,10A, 10K) ermittelt wird, wobei dazu mittels der ermittelten Lagen der Übergangkanten (2,2A,2K) der Elektrodenblätter (10,10A, 10K) und der ermittelten Lagen der stumpfen Kanten (3,3A,3K) der Elektrodenblätter (10,10A, 10K) ein oder mehrere der folgenden ersten Versätze bestimmt werden:
- einen maximalen Versatz (D1-2) der Lage der Übergangskanten (2A) der Elektrodenblätter der ersten Art (10A),
- einen maximalen Versatz (D4-2) der Lage der Übergangskanten (2K) der Elektrodenblätter der zweiten Art (10K),
- einen maximalen Versatz (D6) der Lage der stumpfen Kanten (3K) der Elektrodenblätter der ersten Art (10K),
- einen maximalen Versatz (D3) der Lage der stumpfen Kanten (3K) der Elektrodenblätter der zweiten Art (10K),
- einen minimalen Versatz (D2-2) der Lage der Übergangskanten (2A) der Elektrodenblätter der ersten Art (10A) zu der Lage der stumpfen Kanten (3K) der Elektrodenblätter der zweiten Art (10K);
- einen minimalen Versatz (D5-2) der Lage der Übergangskanten (2K) der Elektrodenblätter der zweiten Art (10K) zu der Lage der stumpfen Kanten (3A) der Elektrodenblätter der ersten Art (10A).

8. Das Verfahren nach zumindest den Ansprüchen 5 und 6, **dadurch gekennzeichnet, dass** eine Ablagegenauigkeit der Elektrodenblätter (10,10A, 10K) ermittelt wird, wobei dazu mittels der ermittelten Lagen der äußeren Kanten (1,1A, 1K) der Elektrodenblätter (10,10A, 10K) und der ermittelten Lagen der stumpfen Kanten (3,3A,3K) der Elektrodenblätter (10,10A, 10K) ein oder mehrere der folgenden zweiten Versätze bestimmt werden:
- einen maximalen Versatz (D1-1) der Lage der äußeren Kanten (1A) der Elektrodenblätter der ersten Art (10A);
- einen maximalen Versatz (D4-1) der Lage der äußeren Kanten (1K) der Elektrodenblätter der zweiten Art (10K);
- einen maximalen Versatz (D6) der Lage der stumpfen Kanten (3A) der Elektrodenblätter der ersten Art (10A);
- einen maximalen Versatz (D3) der Lage der stumpfen Kanten (3K) der Elektrodenblätter der zweiten Art (10K);
- einen minimalen Versatz (D2-1) der Lage der äußeren Kanten (1A) der Elektrodenblätter der ersten Art (10A) zu der Lage der stumpfen Kanten (3K) der Elektrodenblätter der zweiten Art (10K);
- einen minimalen Versatz (D5-1) der Lage der äußeren Kanten (1K) der Elektrodenblätter der zweiten Art (10K) zu der Lage der stumpfen Kanten (3A) der Elektrodenblätter der ersten Art (10A).

9. Der Verfahren nach einem der vorhergehenden Ansprüche, **dadurch gekennzeichnet, dass** die Lage der Übergangskante (1,1A,1K) eine erste Lage der Übergangskante (1,1A,1K) für eine erste Seite der beidseitigen Beschichtung (10B) und eine zweite Lage der Übergangskante (2,2A,2K) für eine zweite Seite der beidseitigen Beschichtung (10B) des Elektrodenblatts (10,10A,10K) umfasst, wobei die erste und die zweite Lage der Übergangskante (2,2A,2K) zumindest anhand der ausgerichteten Geometrien der optischen Aufnahme bestimmt wird.

10. Das Verfahren nach Anspruch 8, dadurch genkennzeichnet, dass jeder Versatz (D1-1,D1-2,D2-1,D2-2,D3, D4-1,D4-2, D5-1, D5-2, D6) für jedes Elektrodenblatt (10,10A,10K) für zwei entlang der y-Achse gegenüberliegende Eckbereiche des Elektrodenblatts (10,10A,10K) bestimmt wird, wobei für jeden der Versätze (D1-1, D1-2,D2-1,D2-2,D3, D4-1,D4-2, D5-1, D5-2, D6) ein Toleranzbereich vorgegeben ist, wobei für jede Ecke und deren ermittelten und zugeordneten Versätze (D1-1,D1-2,D2-1,D2-2,D3, D4-1,D4-2, D5-1, D5-2, D6) ermittelt wird, ob zumindest einer der ermittelten und zugeordneten Versätze (D1-1,D1-2,D2-1,D2-2,D3, D4-1,D4-2, D5-1, D5-2, D6) außerhalb des ihm zugeordneten Toleranzbereich liegt, wobei wenn zumindest einer der Versätze (D1-1,D1-2,D2-1,D2-2,D3, D4-1,D4-2, D5-1, D5-2, D6) außerhalb des ihm zugeordneten Toleranzbereichs liegt, der ESV (4) einem Ausschuss zugeordnet wird.

11. Das Verfahren nach den Ansprüchen 7 und 9, **dadurch gekennzeichnet, dass** die Übergangskante (2,2A,2K) zumindest eines Elektrodenblatts (10,10A,10K) entlang der y-Achse schräg verläuft, so dass die ersten Versätze mit Bezug zur Lage der schrägverlaufenden Übergangskante (2,2A,2K) für jeden der zwei Eckbereiche unterschiedlich groß sind und separat bestimmt und ausgewertet werden.

12. Das Verfahren gemäß einem der vorhergehenden Ansprüche, **dadurch gekennzeichnet, dass** die Lage der Übergangskante (2A) der Elektrodenblätter der ersten Art (10A) nur aus der optische Aufnahme bestimmt wird und/oder **dadurch gekennzeichnet, dass** die Lage der äußeren Kante der Elektrodenblätter der zweiten Art (10K) nur aus der optischen Aufnahme bestimmt wird.

13. Ein System zu Bestimmung von Qualitäts- und Prozessparametern eines ESV (4), wobei das System folgenden Komponenten aufweist:
- eine optische Erfassungseinheit aufweist, die dazu eingerichtet ist, optische Aufnahmen von Elektrodenblätter (10,10A,10K) von einer ersten und einer zweiten Seite des Elektrodenblatts zu machen,
- eine ESV-Stapeleinrichtung, die dazu eingerichtet ist, die Elektrodenblätter (10,10A,10K) zu einem ESV (4) zu stapeln, wobei das System dazu eingerichtet ist, jedes Elektrodenblatt (10,10A,10K) zu indizieren, so dass eine Zuordnung jedes Elektrodenblatts (10,10A,10K) aus den optischen Aufnahmen im ESV erfolgt,
- eine computer-tomografische Aufnahmeeinrichtung, die dazu eingerichtet ist, eine dreidimensionale Aufnahme des ESV-Stapels zu erzeugen
**dadurch gekennzeichnet, dass** das System einen Computer umfasst, der dazu eingerichtet ist, die Komponenten des Systems über Schnittstellen zu steuern und das Verfahren nach einem der vorhergehenden Ansprüche durchzuführen.

14. Computerprogram umfassend Computerprogrammcode, der wenn er auf einem Computer ausgeführt wird, insbesondere wenn er auf dem Computer des Systems nach Anspruch 13 ausgeführt wird, den Computer dazu veranlasst, das Verfahren nach einem der Ansprüche 1 bis 12 durchzuführen.
